# EUROPEAN PATENT SPECIFICATION

(11) **EP 1 013 575 B1**
(45) Date of publication and mention of the grant of the patent: **02.03.2005**
(21) Application number: 99124812.1
(22) Date of filing: 14.12.1999
(51) Int. Cl.: B65G 65/00, B65G 49/08, F27D 3/00

(54) **Kiln loading and unloading system, particularly for ceramic products**
Lade- und Entladesystem für Brennofen, insbesondere für keramische Produkte
Système de chargement et de déchargement d'un four, en particulier pour des produits céramiques

(30) Priority: 22.12.1998 IT MO980260
(43) Date of publication of application: 28.06.2000
(73) Proprietor: GRUPPO BARBIERI & TAROZZI S.r.l., 41043 Formigine (Modena) (IT)
(72) Inventor: Tarozzi, Fausto, 20145 Milano (IT)
(74) Representative: Burrows, Anthony Gregory

(56) References cited:
- EP-A- 0 445 695
- DE-A- 3 320 737
- FR-A- 2 008 956
- FR-A- 2 351 033

## Description

The present invention relates to a kiln loading and unloading system, particularly for ceramic products.

In the ceramic tile-making industry, along the lines for feeding tiles to a firing kiln and for removing them from the kiln there are so-called buffer devices, i.e. devices designed to load any tiles that form excesses due to any problem that might occur upstream or downstream of the kiln on the production lines and then redistribute them on these lines when the problem is eliminated.

These devices, generally known as compensators, essentially consist of grid-like lattices arranged so as to straddle the conveyance lines and provided with a plurality of superimposed and vertically movable platforms onto which the tiles are loaded.

A simplified embodiment of these compensators consists of a portal-shaped frame, along the uprights of which chains or the like move in a parallel configuration; the chains are closed in a loop on driving and guiding wheels, and said platforms are supported between them.

In a second more complicated embodiment of the compensators, the grid-like frames are shaped like a parallelepiped; lattices move vertically in the frames and are composed of uprights and cross-members (or rods) rigidly connected to each other so as to compose a sort of cage with superimposed platforms on which the tiles are deposited.

In this latter case, the lattices also require, for their vertical movement, to provide vertically below them a pit which is formed in the floor and into which the lattices can descend when it is necessary to load (or unload) tiles in the upper orders of platforms.

This prior art suffers numerous drawbacks; the first one is the need to provide important, expensive and permanent masonry work in the industrial buildings in which the plants are installed.

A second drawback is the fact that the vertical movement of the rod-based lattices can be jammed by tiles which accidentally move out of place and interfere between the rods and the rollers of the conveyance platforms between which the rods pass snugly in a comb-like arrangement.

A third drawback is caused by the overall dimensions that the plants assume due to the objective need to inevitably provide compensators along the conveyance lines; the lines must further follow forced paths in order to be able to use the compensators when necessary.

A fourth drawback is represented by the fact that the compensators have constructive characteristics which prevent their simultaneous use, unless substantial structural modifications are performed, for tiles of different sizes or for products of different kinds.

The aim of the present invention is to solve the above-described problems of the prior art by providing a kiln loading and unloading system, particularly for ceramic products, which can be installed without having to carry out masonry work, can avoid damaging blockages of the operation of the compensators, has a modular structure and limited dimensions, and further allows to handle products of different kinds and sizes without having to modify its structure every time the product changes.

This aim, this object and others are achieved by a kiln loading and unloading system, particularly for ceramic products, comprising a corresponding pair of horizontal conveyance platforms with motorized parallel and interposed rollers, each platform being aligned respectively between the inlet and the outlet of the kiln and the transverse end portions of corresponding conveyance lines which merge in the platforms, characterized in that each platform is provided with a continuous co-planar extension which is directed away from the kiln, the extension being divided into at least three consecutive sections which are individually motorized independently of each other, a first one of the sections, directed towards the kiln, and a second intermediate one of the sections being fixed in a co-planar arrangement, at least one third end section being combined with lifting means for raising the section.

Further characteristics and advantages will become apparent from the following detailed description of a preferred embodiment of a kiln loading and unloading system, particularly for ceramic products, illustrated only by way of non-limitative example in the accompanying drawings, wherein:
Figure 1 is a side view of the inlet region of a kiln, provided with the corresponding loading system;
Figure 2 is a corresponding top view thereof;
Figure 3 is a side view of the unloading region of a kiln provided with the corresponding unloading system;
Figure 4 is a corresponding top view thereof.

With reference to the above figures, 1a designates a loading system of a kiln 2, particularly for ceramic products, and 1b designates a corresponding unloading system.

Each one of the systems 1a and 1b comprises a corresponding conveyance platform 3a and 3b; these platforms are horizontal and are of the type with parallel and motorized rollers 4.

Each platform 3a and 3b is interposed and aligned respectively between the inlet and the outlet of the kiln 2 and the transverse end portions of corresponding conveyance feed lines 5 and 6 which merge at the platforms 3a and 3b respectively for feeding and removing the ceramic products.

Each platform 3a and 3b is provided with an extension 7 which is co-planar and continuous and is directed away from the kiln 2.

Each extension is in turn divided into at least three consecutive sections, designated by the reference numerals 7a, 7b and 7c respectively, which are motorized individually and independently of the other ones: the first sections 7a are directed towards the kiln 2 and the second intermediate sections 7b are fixed in a co-planar arrangement, whereas the third end sections 7c are associated with lifting means 8 adapted to raise them.

At least one lattice 9 can straddle the first and second sections 7a and 7b, so as to allow the passage of the products; the lattice is shaped like a parallelepiped and has superimposed horizontal supporting platforms which are composed of a plurality of parallel free rollers 9a and is normally used for storing ceramic products, such as tiles and the like, in layers; the lattice 9 is commonly known as roller box and will be referenced as such hereinafter.

Advantageously, the plan shape of each roller box 9 is substantially equal to the plan shape of the sum of the first and second sections 7a and 7b, and the three sections that compose the extension 7 have mutually identical dimensions.

In summary, the extension 7 is suitable to move the tiles or other ceramic products into a region of the roller box 9 which is considered as a rear region in the configuration of the system 1a and 1b.

According to a possible alternative embodiment of the latter, the sections 7a and 7b can coincide as a whole with one of the lower platforms of rollers 9a of a box 9.

The lifting means 8 are constituted by a frame 10 which is portal-shaped and is provided with supporting means, in practice a cross-member 11, which is mounted so that it can slide along the uprights 10a and with which the third end section 7c of the extension 7 is bilaterally rigidly coupled.

First means 12 for motorizing the roller platforms 9a of the box 9 are also mounted on said uprights 10a of the frame 10 so that they can slide; the means consist of one or two arms 13 which cantilever out horizontally so as to be laterally adjacent to the box 9 and are provided with conventional motor elements which can be rotationally coupled to the ends of the rollers 9a of the box; the elements are not shown in detail because they are of a conventional type.

In the system 1b for unloading the kiln 2, the transverse end portions of the removal line 6 are two, are mutually laterally adjacent and are designated by the reference numerals 6a and 6b respectively; moreover, in a possible modular lengthwise extension of the systems 1a and 1b, it is possible to arrange downstream of the third end section 7c at least one additional second roller box 9 whose structure and dimensions may even be different with respect to the box 9 that is already provided as standard, and which can be followed by an additional portal 10 which serves two additional boxes 9, and so forth up to the intended operating capacity.

The operation of the invention is as follows: the ceramic products, in the specific case tiles, arrive from the feed line 5 and accumulate, arranged in orderly rows, at the end of the line.

If the firing kiln 2 is free, the ordered rows of tiles are moved in succession on the platform 3a and are inserted from there into the kiln 2.

If the kiln is occupied or blocked, the rows of tiles are moved on the opposite side on the first section 7a of the extension 7, passing below the roller box 9 which straddles the two sections 7a and 7b.

When the rows of tiles have formed an array, i.e. an arrangement of rows and columns of tiles which covers the entire surface of the first section 7a, the section motorizes its conveyor rollers and transfers the array onto the second intermediate section 7b.

From there, the array is then transferred onto the third final section 7c of the extension 7; of course this is done when the third section is at a level which is co-planar with respect to the other two sections 7b and 7a.

While the above-described operating cycle continues, if the downstream blockage persists, in order to accommodate the rows of tiles that cannot be diverted onto the surface 3a, and then to the kiln 2, the third section 7c rises, lifting the array until it arranges itself co-planar with respect to a roller platform 9a of the box 9 intended for storage.

The roller platform 9a is motorized by means of the elements carried on the arm (or arms) 13, which also moves so as to become co-planar with respect to the platform; in practice, a substantially continuous supporting platform is formed between the section 7c and the roller platform 9a of the box 9 and allows, by motorizing the respective rollers, to transfer the array onto said platform, of which it advantageously occupies a portion (half of it in the specific case).

Once it has been unloaded, the section 7c returns downwards to the level which is co-planar to the other sections 7b and 7a in order to repeat the above-described cycle.

This is repeated in reverse at the outlet of the kiln 2.

If the removal lines 6 are blocked, the rows of tiles in output are in fact sorted so as to constitute step by step the arrays on the first section 7a; once the arrays have been formed, they are transferred from the first section onto the second section 7b and from there onto the third section 7c.

It is observed that the motorization of the rollers of each section of the extension 7 is independent of the others; in this way it is possible, while for example the second section 7b is transferring one array onto the section 7c, for the first section 7a to continue to simultaneously receive rows of tiles in order to form a subsequent array.

When an array in output is transferred onto the third section 7c, the section, as occurs at the inlet of the kiln 2, rises by sliding along the portal-shaped frame 10; likewise, the corresponding arm (or arms) 13 reaches (or reach) the same level and by motorizing the rollers 9a of the intended platform, together with the motorization of the rollers of the third section 7c, which is independent but has the same speed, transfers (or transfer) the array onto the platform.

When the problems that interrupt the production circuit are solved, the above-described operating cycles are reversed and arrays of tiles are removed from the box 9 and transferred again by successive rows onto the platforms 3a and onto the end portion 6b.

From the platform 3a, in the inlet region of the kiln 2 and alternately with the tiles coming from the line 5, i.e. in any gaps-existing between them, the arrays are sent to firing; correspondingly, from the platform 3b, in the outlet region of the kiln 2, the arrays are transferred onto the first end portion 6a of the removal line 6; simultaneously, the arrays of tiles loaded earlier are unloaded from the box 9 and, by following the storage path in reverse, reach the first section 7a: from this, they are again divided into parallel rows, each of which is transferred onto the second end portion 6b and, by alternating with the rows that arrive from the first end portion 6a, they are inserted thereby in the available spaces left between the rows.

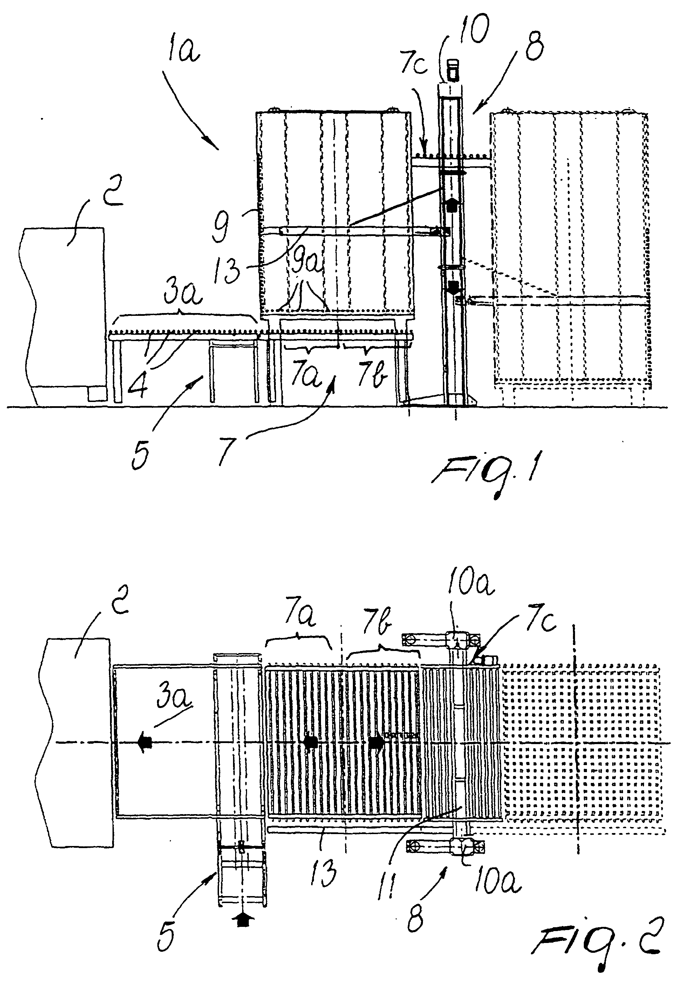

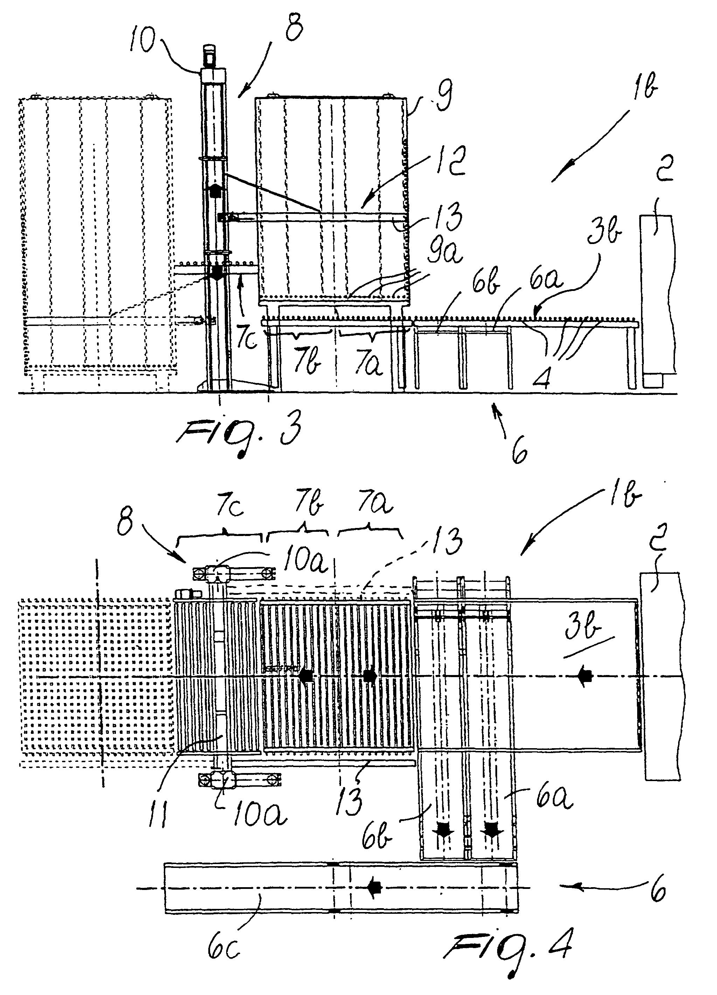

The shape of the loading and unloading system for the kiln 2 allows to arrange, in a modular fashion, other boxes 9 downstream of the portal-shaped frames 10 and other boxes downstream of the additional boxes 9, and so forth, until the capacity intended for the requirements of the system is reached: Figures 1 and 3 illustrate in dashed lines a first step of the possible extension.

In a further embodiment of the system according to the invention, it is possible to make the first sections 7a and 7b of each extension 7 coincide with one of the lower supporting platform of a box 9 with rollers 9a.

In practice it has been observed that the above-described invention achieves the intended aim and objects, i.e. that it allows to provide a so-called buffer without having to carry out masonry work and without having to provide specific compensators, using instead structures which are normally available.

The invention thus conceived is susceptible of several modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A kiln loading and unloading system, particularly for ceramic products, comprising a corresponding pair of horizontal conveyance platforms (3a, 3b) with motorized parallel and interposed rollers (4), each platform (3a, 3b) being aligned respectively between the inlet and the outlet of the kiln (2) and the transverse end portions of corresponding conveyance feed lines (5, 6) which merge in said platforms (3a, 3b), **characterized in that** each platform (3a, 3b) is provided with a continuous co-planar extension (7) directed away from the kiln (2), the extension (7) being divided into at least three consecutive sections (7a, 7b, 7c) which are individually motorized independently of each other, a first one (7a) of said sections, directed towards the kiln (2), and a second, intermediate one (7b) of the sections being fixed in a co-planar arrangement, at least one third, end section (7c) being combined with lifting means (8) for raising the section (7c).

2. The system according to claim 1, **characterized in that** a lattice (9) is arranged in a through configuration so as to straddle the first and second sections (7a, 7b), said lattice (9) being shaped like a parallelepiped with superimposed horizontal platforms which are composed of multiple parallel and free rollers (9a) for storing tiles and the like in layers.

3. The system according to claim 2, **characterized in that** the plan extension of said lattice (9) is substantially equal to the sum of the plan extensions of said first and second sections (7a, 7b).

4. The system according to any preceding claim, **characterized in that** said at least three consecutive sections (7a, 7b, 7c) that compose said co-planar extension (7) have mutually identical dimensions.

5. The system according to any preceding claim, **characterized in that** said co-planar extension (7) is adapted to move the tiles into a region which is considered the rear region of said lattice (9).

6. The system according to claim 2 or 3, or claim 4 or 5 as appended to claim 2, **characterized in that** said first (7a) and second (7b) sections constitute, by coinciding, one of the lower platforms of said lattice (9).

7. The system according to any preceding claim, **characterized in that** said lifting means (8) is constituted by a portal-shaped frame (10) which is provided with supporting means (13) which can slide along uprights and with which said at least one third, end section (7c) of said co-planar extension (7) is bilaterally rigidly coupled.

8. The system according to claim 7 as appended to claim 2, **characterized in that** corresponding first means (12) for motorizing the roller platforms (9a) of said lattice (9) can move along the uprights of said portal-shaped frame (10) together with said supporting means (13) and independently thereof.

9. The system according to any preceding claim, **characterized in that** at least at the outlet of said kiln (2) first and second transverse end portions (6a, 6b) of the conveyance feed line (6) are arranged side-by-side.

10. The system according to claim 2, 3, 6, or 8, or claim 4, 5, 7, or 9 as appended to claim 2, **characterized in that** an additional lattice (9) is provided downstream of the third end section (7c).

11. The system according to claim 10, **characterized in that** said additional lattice (9) has a structure and dimensions which are different from those of the first-mentioned lattice (9).

12. The system according to claim 10 or 11 as appended to claim 8, **characterized in that** second means (12) for motorizing rollers of said second lattice (9) are fitted on said portal-shaped frame (10) so that they can slide and are directed away from said first means (12).

13. The system according to claim 10, 11 or 12 as appended to claim 8, **characterized in that** further said portal-shaped frames (10) and further said lattices (9) are arranged repetitively and in a modular fashion downstream of said additional lattice (9).

## Patentansprüche

1. Be- und Entladesystem für einen Brennofen, insbesondere für keramische Produkte, das ein entsprechendes Paar horizontaler Förderplattformen (3a, 3b) mit parallelen und dazwischen angeordneten motorisierten Rollen (4) aufweist, wobei jede Plattform (3a, 3b) jeweils zwischen dem Einlass und dem Auslass des Brennofens (2) und den transversalen Endteilen entsprechender Förderzuführungsstrecken (5, 6) ausgerichtet ist, die sich in den Plattformen (3a, 3b) zusammenfügen, **dadurch gekennzeichnet, dass** jede Plattform (3a, 3b) mit einer kontinuierlichen, coplanaren Verlängerung (7) versehen ist, die von dem Brennofen (2) weggerichtet ist, wobei die Verlängerung (7) in zumindest drei aufeinander folgende Abschnitte (7a, 7b, 7c) geteilt ist, die individuell und unabhängig voneinander motorisiert sind, von denen ein erster Abschnitt (7a) in Richtung des Brennofens (2) gerichtet ist, ein zweiter mittlerer Abschnitt (7b) in einer coplanaren Anordnung gehalten ist, und zumindest ein dritter Endabschnitt (7c) mit Hubmitteln zum Heben des Abschnitts (7c) kombiniert ist.

2. System nach Anspruch 1, **dadurch gekennzeichnet, dass** zumindest ein Gitter (9) in einer durchgängigen Konfiguration angeordnet ist, um so rittlings über dem ersten Abschnitt (7a) und dem zweiten Abschnitt (7b) zu stehen, wobei das Gitter (9) wie ein Parallelepiped mit überlagerten horizontalen Plattformen geformt ist, die aus mehreren parallelen und freien Rollen (9a) bestehen, um Ziegel bzw. Kacheln oder ähnliches schichtweise zu lagern.

3. System nach Anspruch 1 und 2, **dadurch gekennzeichnet, dass** die ebene Ausdehnung des Gitters (9) im Wesentlichen gleich der Summe der ebenen Ausdehnungen des ersten Abschnitts (7a) und des zweiten Abschnitts (7b) ist.

4. System nach einem der vorhergehenden Ansprüche, **dadurch gekennzeichnet, dass** die drei aufeinander folgenden Abschnitte (7a, 7b, 7c), die die coplanare Verlängerung bilden, gegenseitig identische Abmessungen aufweisen.

5. System nach einem der vorhergehenden Ansprüche, **dadurch gekennzeichnet, dass** die coplanare Verlängerung angepasst ist, die Ziegel in einen Bereich zu bewegen, der als hinterer Bereich des Gitters (9) angesehen wird.

6. System nach Anspruch 2 oder 3, oder Anspruch 4 oder 5 in Abhängigkeit von Anspruch 2, **dadurch gekennzeichnet, dass** der erste Abschnitt (7a) und der zweite Abschnitt (7b), mittels Überdeckung, eine der unteren Plattformen des Gitters (9) bilden.

7. System nach einem der vorhergehenden Ansprüche, **dadurch gekennzeichnet, dass** die Hubmittel (8) durch einen portalförmigen Rahmen (10) gebildet werden, der mit Trägermitteln (13) versehen ist, die entlang von Hubrahmen gleiten können und mit denen zumindest der eine dritte Endabschnitt (7c) der coplanaren Verlängerung bilateral steif gekoppelt ist.

8. System nach Ansprüchen 2 und 7, **dadurch gekennzeichnet, dass** sich entsprechende erste Mittel (12) zum Motorisieren der Rollenplattformen (9a) des Gitters (9) entlang des Hubrahmens des portalförmigen Rahmens (10) zusammen mit den Trägermitteln (13) und unabhängig davon bewegen können.

9. System nach einem der vorhergehenden Ansprüche, **dadurch gekennzeichnet, dass** bei dem Auslass des Brennofens (2) zumindest ein erster und ein zweiter transversaler Endabschnitt (6a, 6b) der Förderzuführungsstrecken (6) vorgesehen sind und nebeneinander angeordnet sind.

10. System nach Anspruch 2, 3, 6 oder 8 oder nach Anspruch 2 und 4, 2 und 5, 2 und 7 oder 2 und 9, **dadurch gekennzeichnet, dass** ein zusätzliches zweites Gitter (9) stromabwärts gelegen zu dem dritten Endabschnitt (7c) vorgesehen ist.

11. System nach Anspruch 10, **dadurch gekennzeichnet, dass** der zusätzliche Rollkasten (9) eine Struktur und Abmessungen aufweist, die verschieden in Bezug auf den ersten Rollkasten (9) sind.

12. System nach Ansprüchen 8 und 10, **dadurch gekennzeichnet, dass** die zweiten Mittel (12) zum Motorisieren der Rollen des zweiten Rollkastens (9) an den portalförmigen Rahmen (10) angepasst sind, so dass sie gleiten können und dass sie von den ersten Mitteln (12) weg gerichtet sind.

13. System nach Anspruch 7 und den vorhergehenden Ansprüchen 10 bis 12, **dadurch gekennzeichnet, dass** des Weiteren die portalförmigen Rahmen (10) und die zweiten Rollkästen (9) sich wiederholend angeordnet und auf eine modulare Weise stromabwärts zu dem zusätzlichen zweiten Rollkasten (9) angeordnet werden können.

## Revendications

1. Système de chargement et de déchargement d'un four, en particulier pour des produits céramiques, comprenant une paire correspondante de plates-formes horizontales (3a, 3b) de transport avec des rouleaux motorisés parallèles et interposés (4), chaque plate-forme (3a, 3b) étant respectivement alignée entre l'entrée et la sortie du four (2) et les portions terminales transversales de chaînes de transport d'alimentation correspondantes (5, 6) qui aboutissent au niveau desdites plates-formes (3a, 3b), ***caractérisé en ce que*** chaque plate-forme (3a, 3b) est munie d'une extension coplanaire continue (7) dans une direction opposée au four (2), l'extension (7) étant divisée en au moins trois sections consécutives (7a, 7b, 7c) qui sont motorisées individuellement et indépendamment les unes des autres, une première (7a) desdites sections, dirigée vers le four (2), et une deuxième (7b), intermédiaire, des sections étant fixées dans un ordonnancement coplanaire, au moins une troisième section terminale (7c) étant combinée à des moyens de levage (8) destinés à soulever la section (7c).

2. Système selon la revendication 1, ***caractérisé en ce qu***'un treillis (9) est agencé selon une configuration traversante de manière à chevaucher les première et deuxième sections (7a, 7b), ledit treillis (9) ayant la forme d'un parallélépipède avec des plates-formes horizontales superposées qui sont composées de multiples rouleaux parallèles et libres (9a) pour le stockage en couches de carrelages et éléments similaires.

3. Système selon la revendication 2, ***caractérisé en ce que*** l'extension en vue en plan dudit treillis (9) est sensiblement égale à la somme des extensions en vue en plan desdites première et deuxième sections (7a, 7b).

4. Système selon l'une quelconque des revendications précédentes, ***caractérisé en ce que*** lesdites au moins trois sections consécutives (7a, 7b, 7c) qui composent ladite extension coplanaire (7) ont des dimensions identiques entre elles.

5. Système selon l'une quelconque des revendications précédentes, ***caractérisé en ce que*** ladite extension coplanaire (7) est apte à déplacer les carrelages dans une zone qui est considérée comme la zone arrière dudit treillis (9).

6. Système selon la revendication 2 ou 3, ou selon la revendication 4 ou 5 telles que rattachées à la revendication 2, ***caractérisé en ce que*** lesdites première (7a) et deuxième (7b) sections constituent, par le fait qu'elles coïncident, l'une des plates-formes inférieures dudit treillis (9).

7. Système selon l'une quelconque des revendications précédentes, ***caractérisé en ce que*** lesdits moyens de levage (8) sont constitués par un cadre en forme de portique (10) qui est muni de moyens de support (13) qui peuvent coulisser le long de montants et avec lesquels ladite au moins une troisième section terminale (7c) de ladite extension coplanaire est couplée bilatéralement de manière rigide.

8. Système selon la revendication 7 telle que rattachée à la revendication 2, ***caractérisé en ce que*** des premiers moyens correspondants (12) pour la motorisation des plates-formes (9a) à rouleaux dudit treillis (9) peuvent se déplacer le long des montants dudit cadre en forme de portique (10) en même temps que lesdits moyens de support (13) et indépendamment de ceux-ci.

9. Système selon l'une quelconque des revendications précédentes, ***caractérisé en ce qu***'au moins à la sortie dudit four (2), une première et une deuxième portions terminales transversales (6a, 6b) des chaînes (6) de transport d'alimentation sont disposées côte à côte.

10. Système selon la revendication 2, 3, 6 ou 8, ou la revendication 4, 5, 7 ou 9 telles que rattachées à la revendication 2, ***caractérisé en ce qu***'un treillis supplémentaire (9) est prévu en aval de la troisième section terminale (7c).

11. Système selon la revendication 10, ***caractérisé en ce que*** ledit treillis supplémentaire (9) possède une structure et des dimensions qui sont différentes de celles du premier treillis (9) mentionné.

12. Système selon la revendication 10 ou 11 telles que rattachées à la revendication 8, ***caractérisé en ce que*** des deuxièmes moyens (12) pour la motorisation des rouleaux dudit deuxième treillis (9) sont fixés sur ledit cadre en forme de portique (10) de manière à pouvoir coulisser et sont dans une direction opposée auxdits premiers moyens (12).

13. Système selon la revendication 10, 11 ou 12 telles que rattachées à la revendication 8, ***caractérisé en ce que*** d'autres dits cadres en forme de portique (10) et d'autres dits treillis (9) sont ordonnancés répétitivement et d'une façon modulaire en aval dudit treillis supplémentaire (9).
